# EUROPEAN PATENT SPECIFICATION

(11) **EP 1 249 355 B1**
(45) Date of publication and mention of the grant of the patent: **25.08.2004**
(21) Application number: 01201319.9
(22) Date of filing: 10.04.2001
(51) Int. Cl.: B60B 5/02

(54) **Lightweight scooter wheel**
Leichtrad für Motorroller
Roue légère pour scooter

(43) Date of publication of application: 16.10.2002
(73) Proprietor: PIAGGIO & C. S.p.A., 56025 Pontedera (Pisa) (IT)
(72) Inventor: Bagnoli, Alessandro, 56030 Perignano di Lari (Pisa) (IT); Bernardi, Luca, 56025 Pontedera (Pisa) (IT)
(74) Representative: Zanardo, Giovanni

(56) References cited:
- DE-A- 3 637 214
- DE-A- 4 040 829
- DE-C- 4 123 459
- US-A- 3 870 371
- US-A- 4 280 736
- US-A- 4 900 097

## Description

This invention refers to a lightweight scooter wheel.

As is well known to the experts in the branch, the scooter wheels in present use are of three structural types:
- hub and rim both entirely made of steel,
- hub and rim both entirely made of aluminum,
- hub made of steel or aluminum, and rim made of steel bolted to the hub itself.

It is also known that each of the wheel types mentioned above may be used both for disc brakes and for drum brakes.

The transmission of the braking moment occurs in the first case from the disc (braked by a caliper) to the wheel, based on a friction-blockage by screws from the disc to the wheel hub and from there to the wheel itself. In the second case, on the other hand, the transmission occurs directly from the brake shoes to the brake disc of the wheel hub.

In each of these cases the braking moment acts on the wheel hub, where heat evolves as a result of the interaction between the blocked parts, a heat which must then be dissipated toward the outside.

It is known from US4900097A a wheel according to the preamble of claim 1 comprising a plastic rim associable with a hub, in which the hub and the rim are tied to each other in the presence of insulating plate. The scope of this invention is to produce a particularly lightweight and sturdy wheel.

Another scope is to achieve such a wheel regardless of the nature of the metal constituting the base for the construction of the wheel.

These scopes according to this invention are achieved by producing a lightweight scooter wheel as outlined in claim 1.

Further characteristics also appear in the subordinate claims.

The characteristics and advantages of a lightweight scooter wheel according to this invention will be more fully and clearly evident from the following description, offered for exemplifying and non-limiting purposes, referred to the enclosed simplified drawings, in which:
Figure 1 shows a front view of a lightweight scooter wheel according to this invention in a first embodiment.
Figure 2 is a simplified, partially sectionalized and enlarged lateral view of part of the lightweight scooter wheel shown in Figure 1, showing that this type of design is particularly suitable for a drum brake,
Figure 3 is a sectionalized, enlarged view of a detail of Figure 2,
Figure 4 is a partially sectionalized, simplified and enlarged side view of part of the lightweight scooter wheel according to the invention, in a second embodiment particularly suitable for a disc brake, and
Figure 5 is a partially sectionalized, simplified and enlarged side view of part of the lightweight scooter wheel according to the invention, in a third embodiment showing it to be suitable for a drum brake, but quickly convertible to a disc brake.

As can easily be seen, in order to provide a solution for the technical problems mentioned above, this invention proposes to produce a wheel essentially composed of two components: a metallic hub 12, made for example of aluminum, steel or cast iron, carrying either a drum brake 15 (in the case of a drum brake) or a disc brake 16 (in the case of a disc brake); and a rim 13 made of plastic material, equipped with spokes 14 (made of plastic). In general, the rim 13 is attached to the hub 12 by screws or similar fastening devices. The hub 12 may eventually be finned to promote the dispersion to the environment of the heat generated during the braking action.

According to the invention, moreover, between the hub 12 and the attached rim 13 with its relative spokes 14 some elements must provided to cut off the heat generated by the drum brake 15 or the disc brake 16. Alternatively, some heat cut-off elements may be provided directly between the drum brake 15 or the disc brake 16 and the hub 12.

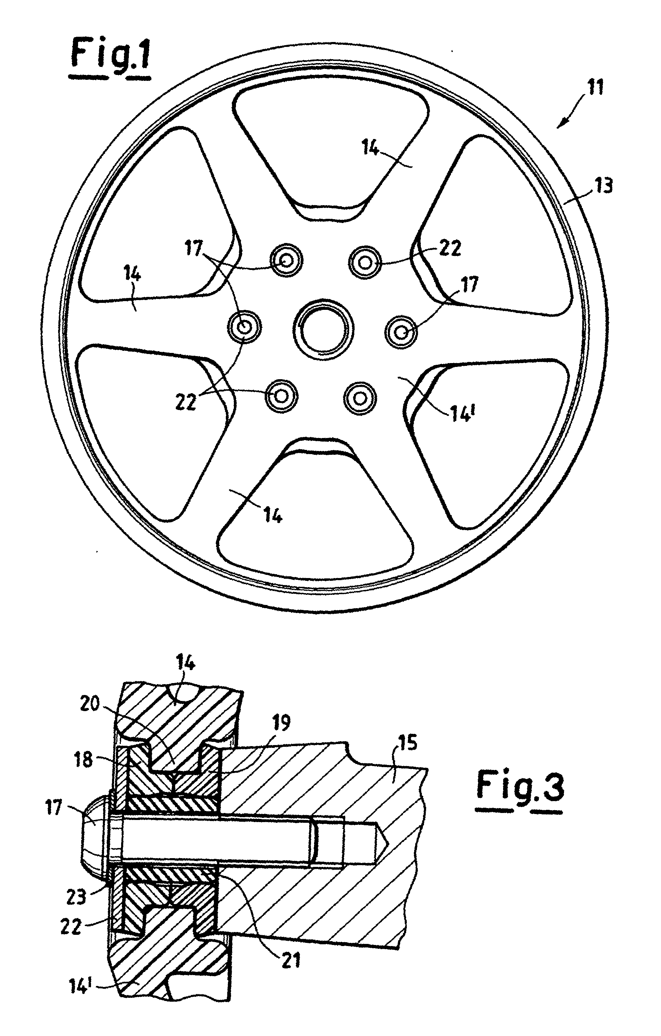

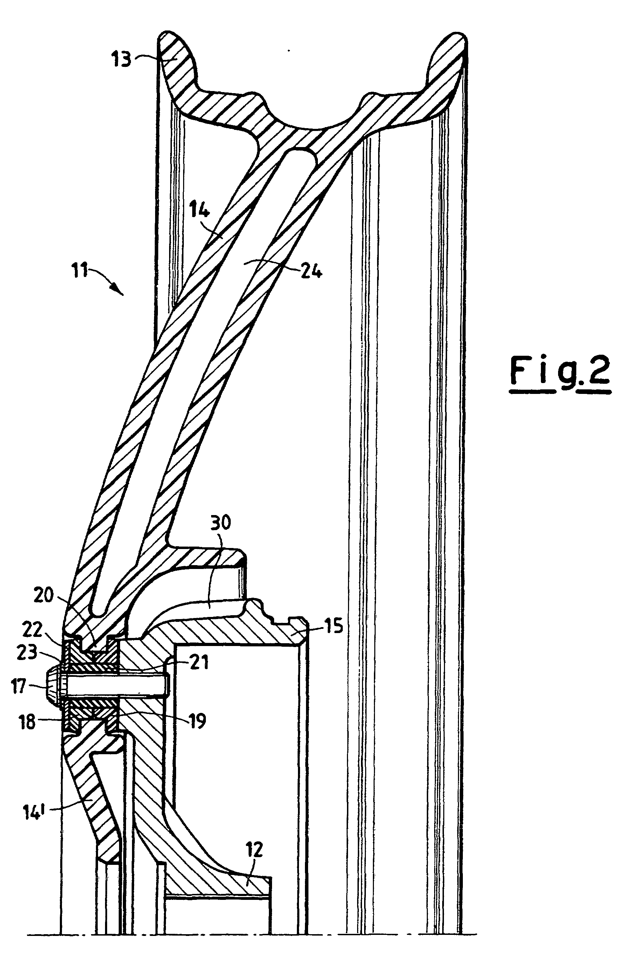

A first reference to the Figures 1, 2 and 3 shows a lightweight scooter wheel according to the invention, in one of its first simplified embodiments, indicated in its overall form by the number 11.

It should be kept in mind that the production of the wheel, while based on the general principles outlined above, may be implemented in various specific forms. Returning for instance to the embodiment of Figures 1, 2 and 3, the spokes 14 are attached to the hub 12 by a number of screws 17. The example shows that the screws 17 are "pack-wise" tightening two bushings 18 and 19, which are in this case identical but may also differ, made of a heat-restistant plastic material. The bushings 18 and 19 are profiled in such a manner as to form at least one seat suitable for receiving an annular extension toward the inside 20, which departs from the spokes 14 and a central connecting body 14'.

The bushings 18 and 19 are fitted on the screws 17 by interposed spacers 21, plain washers 22 and elastic washers 23, which ensure their proper and stable positioning.

The rim 13 may be molded in a single piece with the spokes 14 and be fitted with an internal weight relieving cavity 24 formed during the molding process, for example by a technique based on insufflating air into the plastic material.

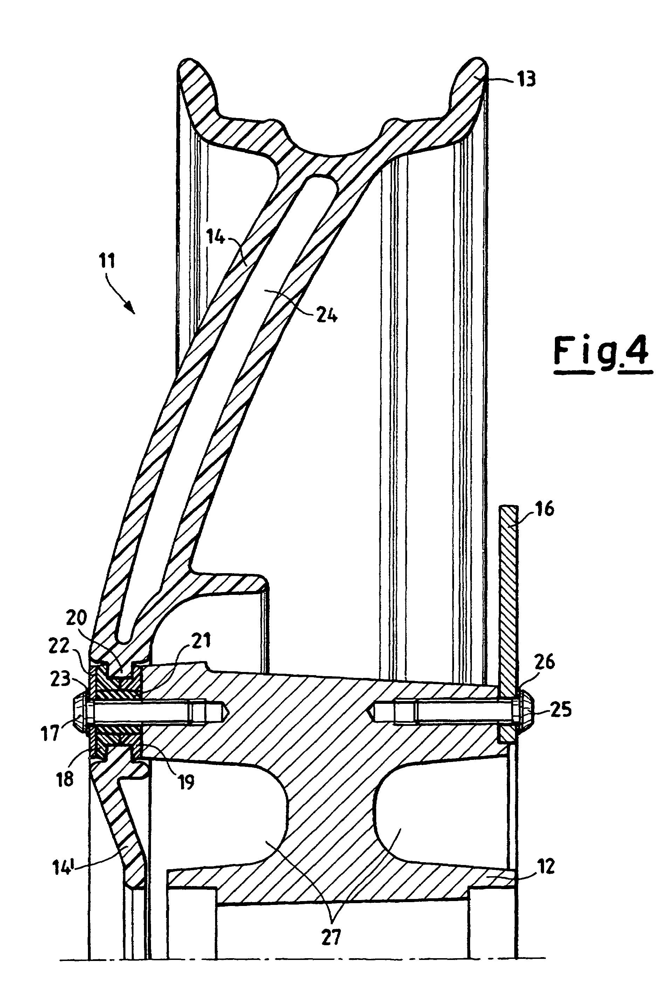

Figure 4 illustrates a second embodiment, also derived from the general principle outlined in the introductory part of the description of the figures, which shows a further possible embodiment.

This is in fact a lightweight wheel according to the invention, equipped with a disc brake 16 so as to firmly attach the latter to the hub 12. This again means a rim 13 fitted with spokes 14 and attached to a hub 12 connected with the mentioned disc brake 16 by further screws 25 and their relative elastic washers 26.

Of course in this case the hub 12 will have an axially elongated shape so as to be appropriately capable of carrying both the spokes 14 with the rim 13 and the disc brake 16. Appropriate cavities 27 provided in the body of the hub 12 will lighten it, but without thereby reducing its strength.

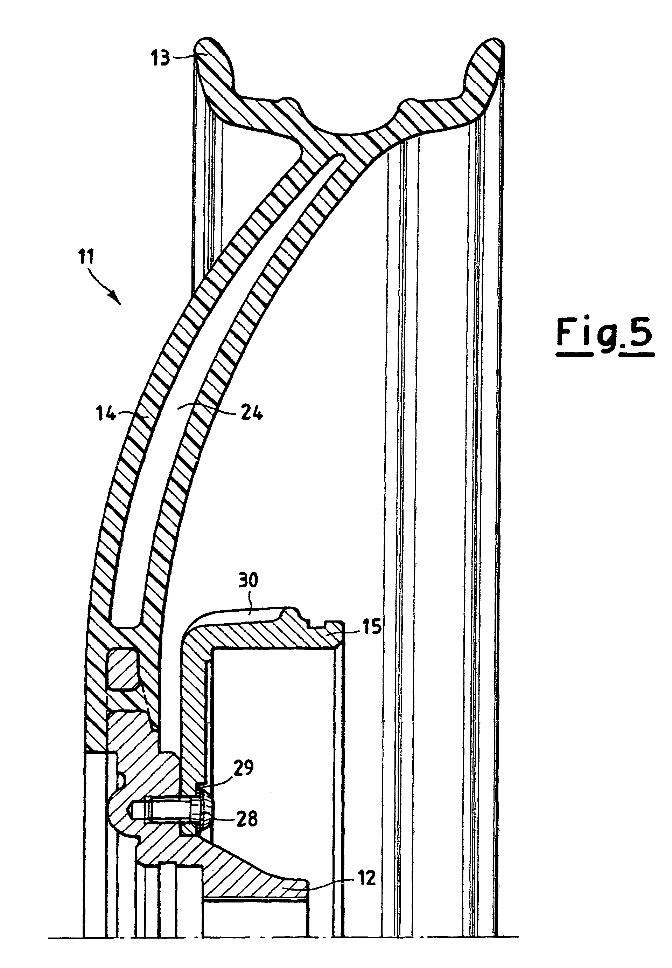

If the further simplification of Figure 5 is now examined, it can be seen that it offers a lightweight wheel according to the invention in the version applicable with a drum brake.

The rim 13, equipped with spokes 14, is "jointly molded" on the hub 12, to which the drum brake 15 is attached by screws 28 and elastic washers 29. It is immediately apparent that the version with a disc brake can be easily derived from that with a drum brake, simply by substituting the drum brake 15 with a disc brake (not shown, but of the type shown above under the number 16 and connected to the hub 12 by screws 25 and elastic washers 26, as in Figure 4). It is alternatively possible to provide an appropriate interface carrying the disc brake itself.

The rim 13, equipped with spokes 14 as described above, may for instance be produced by a technique known as "Gas injection moulding" , which consists of the following essential phases:
a) the injection molding of plastic material in an appropriate mold,
b) the injection of compressed air into the plastic material, while still in a "pasty" state,
c) the maintenance of the compressed air while the plastic material cools down,
d) the relieving of pressure at the end of the cooling phase.

It should be noted that the main advantage of this technique is to make it possible to obtain pieces constituted by particular shapes, for instance of a closed and internally hollow type (tubulars), of variable thickness and characterized by high bending and torsion strength modules, combined with moderate weights.

It can thus be seen that according to this invention the mentioned subdivision of the wheel was found to be necessary in order to impede the transfer of heat from the actually braking organ (drum or brake) to the plastic portion, so as to prevent the rapid structural collapse of the latter. This is done in view of the mechanical characteristics of the plastic material to be injection-molded, which are strongly and quickly reduced by the generated temperature rise.

Mainly because of this reason, the union between rim, spokes and hub (conceived while taking the former problem into account) may be achieved, while not in an exhaustive form, by the two methods already outlined and described above:
a) by interposing between the two mentioned components some bushings made of a (plastic or non-plastc) material of a mechanically heat-resistant and thermally insulating type, endowed with good mechanical characteristics,
b) in a direct manner by moulding, where the heat dispersion generated while braking is for the largest part relying on a finned shape 30 of the drum, while the heat transfer by conduction from the drum itself to the hub and thereby to the plastic portion may be impeded by interposing a thermally insulating material between the drum and the hub. It should be noted that the hub may be produced in such a manner as to support both a drum brake or a disc brake.

This clarifies the advantages of this invention, which can be summarized as follows:
- a good mechanical strength of the wheel, combined with reduced weights and overall inertial moments of the same, compared to those made of steel or aluminum, of the same dimensions and characteristics,
- a low overall cost,
- an (easy) achievement of even complex shapes of the spokes according to the possibilities afforded by the molding technology, for instance by "Gas injection molding",
- the possibility of fitting the same wheel with either a drum brake or a disc brake, by simply changing the element interfacing with the braking portion.

It is obvious that even further examples of a lightweight scooter wheel according to this invention can be offered, without thereby abandoning the scope of protection afforded by the appended claims.

## Claims

1. A lightweight scooter wheel comprising a hub (12) carrying a drum brake (15) or a disc brake (16) and a rim (13, 14, 14') associable with said hub (12), said hub (12) being made of a metallic material and said rim (13, 14, 14') being made of a plastic material, in which said hub (12) and said rim (13, 14, 14') are tied to each other in the presence of elements capable of cutting off the heat evolved from said drum brake (15) or disc brake (16), **characterized in that** said heat-cut off elements are constituted by at least one bushing (18, 19) made of a heat-resistant plastic element placed on a fastening element (17) arranged between said hub (12) and said rim (13, 14, 14').

2. A lightweight scooter wheel according to claim 1, **characterized in that** said at least one bushing (18, 19) is profiled so as to form at least one seat to receive an annular extension toward the inside (20) of the spokes (14) and of the a central connecting body (14') of said rim (13).

3. A lightweight scooter wheel according to claim 1, **characterized in that** said at least one bushing (18, 19) is arranged on said respective fastening element (17) by interposing at least one spacer (21) in the presence of flat washers (22) and elastic washers (23) capable of ensuring a stable positioning.

4. A lightweight scooter wheel according to claim 1, **characterized in that** said heat cut-off elements between said hub (12) and said rim (13, 14) are joint-molded.

5. A lightweight scooter wheel according to claim 1, **characterized in that** said rim (13, 14) comprises a true rim (13) rigidly connected to spokes (14).

6. A lightweight scooter wheel according to claim 5, **characterized in that** said spokes (14) connected to said rim (13, 14) are fitted with internal cavities (24).

7. A lightweight scooter wheel according to claim 1, **characterized in that** said rim (13, 14) comprises a true rim (13) in a single piece with spokes (14) fitted with internal weight relieving cavities (24) obtained during the molding process.

8. A lightweight scooter wheel according to claim 1, **characterized in that** said heat cut-off elements are constituted by a multiple number of bushings (18, 19) made of a heat-resistant plastic material positioned on respective fastening elements (17) arranged between said hub (12) and said rim (13, 14, 14').

## Patentansprüche

1. Leichtrad für Motorroller, umfassend eine Nabe (12), die eine Trommelbremse (15) oder eine Scheibenbremse (16) und eine mit der Nabe (12) verbindbare Felge (13, 14, 14') trägt, wobei die Nabe (12) aus einem metallischen Material gefertigt ist und die Felge (13, 14, 14') aus einem Plastikmaterial gefertigt ist, bei dem die Nabe (12) und die Felge (13, 14, 14') miteinander in Anwesenheit von Elementen verbunden sind, die in der Lage sind, die von der Trommelbremse (15) oder der Scheibenbremse (16) entwickelte Wärme zu sperren,
**dadurch gekennzeichnet, dass** die Wärmesperrelemente aus zumindest einer, aus einem hitzeresistenten Plastikelement hergestellten Buchse (18, 19) bestehen, das auf einem Befestigungselement (17) platziert ist, das zwischen der Nabe (12) und der Felge (13, 14, 14') angeordnet ist.

2. Leichtrad für Motorroller gemäß Anspruch 1, **dadurch gekennzeichnet, dass** die zumindest eine Buchse (18, 19) so profiliert ist, dass sie zumindest eine Aufnahme zum Aufnehmen einer ringförmigen Erweiterung zur Innenseite (20) der Speichen (14) und des zentralen Verbindungskörpers (14') der Felge (13) bildet.

3. Leichtrad für Motorroller gemäß Anspruch 1, **dadurch gekennzeichnet, dass** die zumindest eine Buchse (18, 19) auf dem entsprechenden Befestigungselement (17) durch Zwischenfügen zumindest eines Abstandhalters (21) in Anwesenheit von flachen Unterlegescheiben (22) und elastischen Unterlegscheiben (23), die zum Sicherstellen einer stabilen Positionierung in der Lage sind, angeordnet ist.

4. Leichtrad für Motorroller gemäß Anspruch 1, **dadurch gekennzeichnet, dass** die Wärmesperrelemente zwischen der Nabe (12) und der Felge (13, 14) verbindungsgeformt sind.

5. Leichtrad für Motorroller gemäß Anspruch 1, **dadurch gekennzeichnet, dass** die Felge (13, 14) eine starr mit Speichen (14) verbundene wahre Felge (13) umfasst.

6. Leichtrad für Motorroller gemäß Anspruch 5, **dadurch gekennzeichnet, dass** die mit der Felge (13, 14) verbundenen Speichen (14) mit inneren Hohlräumen (24) versehen sind.

7. Leichtrad für Motorroller gemäß Anspruch 1, **dadurch gekennzeichnet, dass** die Felge (13, 14) eine wahre Felge (13) in einem Stück umfasst, mit Speichen (14), die mit während des Formvorgangs erhaltenen, inneren, gewichtsmindernden Hohlräumen (24) versehen sind.

8. Leichtrad für Motorroller gemäß Anspruch 1, **dadurch gekennzeichnet, dass** die Wärmesperrelemente aus einer Mehrzahl von Buchsen (18, 19) bestehen, die aus einen hitzeresistenten Plastikmaterial hergestellt sind, das auf entsprechenden Befestigungselementen (17) positioniert ist, die zwischen der Nabe (12) und der Felge (13, 14, 14') angeordnet sind.

## Revendications

1. Roue de scooter allégée comprenant un moyeu (12) portant un frein à tambour (15) ou un frein à disque (16) et une jante (13, 14, 14') qui peut être associée audit moyeu (12), ledit moyeu (12) étant en matière métallique et ladite jante (13, 14, 14') étant en matière plastique, dans laquelle ledit moyeu (12) et ladite jante (13, 14, 14') sont assemblés l'un à l'autre grâce à la présence d'éléments aptes à empêcher le transfert de la chaleur dégagée par ledit frein à tambour (15) ou frein à disque (16),
**caractérisée en ce que** lesdits éléments qui empêchent le transfert de chaleur sont constitués par au moins une douille (18, 19) consistant en un élément de matière plastique résistant à la chaleur disposé sur un élément de fixation (17) agencé entre ledit moyeu (12) et ladite jante (13, 14, 14').

2. Roue de scooter allégée selon la revendication 1, **caractérisée en ce que** ladite au moins une douille (18, 19) est profilée de manière à former au moins un siège pour recevoir une extension annulaire, dirigée vers l'intérieur (20), des rayons (14) et d'un corps central de connexion (14') de ladite jante (13).

3. Roue de scooter allégée selon la revendication 1, **caractérisée en ce que** ladite au moins douille (18, 19) est agencée sur ledit élément de fixation respectif (17) en interposant au moins une entretoise (21) en présence de rondelles plates (22) et de rondelles élastiques (23) aptes à assurer un positionnement stable.

4. Roue de scooter allégée selon la revendication 1, **caractérisée en ce que** lesdits éléments qui empêchent le transfert de chaleur entre ledit moyeu (12) et ladite jante (13, 14) sont moulés en commun.

5. Roue de scooter allégée selon la revendication 1, **caractérisée en ce que** ladite jante (13, 14) comprend une jante proprement dite (13) rigidement connectée aux rayons (14).

6. Roue de scooter allégée selon la revendication 5, **caractérisée en ce que** des cavités internes (24) sont ménagées dans lesdits rayons (14) connectés à ladite jante (13, 14).

7. Roue de scooter allégée selon la revendication 1, **caractérisée en ce que** ladite jante (13, 14) comprend une jante proprement dite (13) d'un seul tenant avec des rayons (14) dans lesquels sont ménagées des cavités internes d'allègement (24) obtenues durant le procédé de moulage.

8. Roue de scooter allégée selon la revendication 1, **caractérisée en ce que** lesdits éléments qui empêchent le transfert de chaleur sont constitués d'une pluralité de douilles (18, 19) en matière plastique résistant à la chaleur, qui sont positionnées sur des éléments de fixation respectifs (17) agencés entre ledit moyeu (12) et ladite jante (13, 14, 14').
